Europäisches Patentamt

European Patent Office

Office européen des brevets

(11) Publication number: **0 134 634 B1**

(12) **EUROPEAN PATENT SPECIFICATION**

(45) Date of publication of patent specification: **19.12.90**

(51) Int. Cl.⁵: **A 01 C 1/06**

(21) Application number: **84304195.5**

(22) Date of filing: **21.06.84**

(54) Coated seeds.

(30) Priority: **30.06.83 JP 119814/83**

(43) Date of publication of application:
**20.03.85 Bulletin 85/12**

(45) Publication of the grant of the patent:
**19.12.90 Bulletin 90/51**

(84) Designated Contracting States:
**DE FR GB NL**

(56) References cited:
**CA-A- 901 310**
**DE-A-1 457 894**
**DE-A-1 582 513**
**DE-B-1 084 079**

(73) Proprietor: **SUMITOMO CHEMICAL COMPANY, LIMITED**
**Kitahama 4-chome 5-33**
**Chuo-ku Osaka 541 (JP)**

(72) Inventor: **Kojimoto, Susumu**
**6-6-6, Tsukahara**
**Takatsuki-shi Osaka (JP)**
Inventor: **Nii, Fumio**
**Room 102 1-18-1, Tamagawa**
**Takatsuki-shi Osaka (JP)**
Inventor: **Mori, Toshio**
**2-1-2-213, Kuwatacho**
**Ibaraki-shi Osaka (JP)**

(74) Representative: **Moore, Anthony John et al**
**Gee & Co. Chancery House Chancery Lane**
**London WC2A 1QU (GB)**

**Description**

This invention relates to coated seeds in which the innermost coating layer contains a water repellent in greater concentration than the other layer or layers.

Precise sowing, either mechanically or by hand, has recently come into general use in vegetable culture in order to save labor and to stabilize growth. Furthermore, transplanting culture initially using, for example, a seedling tray or pot has also become popular; and it is accepted in this respect that accurate and precise sowing in to a seedling tray by machines or instruments is a necessary condition for the growing of good seedlings. However, precise sowing is very difficult to achieve mechanically in the case of the odd-shaped seeds of lettuce, carrot and Welsh onion, and in the case of the small-grained seeds of cabbage and Chinese cabbage. Hand sowing of these seeds is inefficient, requiring much labor.

In order to overcome these disadvantages, it has become common practice to coat seeds with a suitable material to produce spherical grains larger than the seeds. The coating material for this purpose is a mixture of an inorganic substance such as diatomaceous earth, talc, clay or calcium carbonate, and a binder such as starch, gelatin or PVA (polyvinyl alcohol). However, coated seeds thus produced lead to a problem in that when they are sown in a field where the groundwater level is high or the soil contains excess water due to rainfall after sowing, or they are sown in soil having a high water content due to excessive flooding, the surrounds of the seeds are sealed with water, so that the supply of oxygen to the seeds becomes insufficient and causes poor germination. In order to overcome this disadvantage it has been proposed to coat the seeds with a coating material containing a water repellent or waterproofing agent, as disclosed in Japanese Patent Application (OPI) No. 85908/1979 and Japanese Patent Publication No. 3469/1963. (The term "OPI" herein used means an unexamined published Japanese Patent Application).

We have carried out various tests on these proposals. As a result, we have found that, if the soil in which the coated seeds are sown has a high water content due to a high rainfall or excessive flooding, poor germination still occurs, leading to disappointing results.

The explanation for this appears to be as follows. Oxygen and water are indispensable for the germination of seeds. But if, after sowing, the soil has a high water content due to a high rainfall or excessive flooding, the surrounds of the seeds are sealed with water, and supply of oxygen to the seeds becomes sufficiently low as to be likely to cause poor germination. This can be overcome by controlling the quantity of water surrounding the seeds, whereby stable germination can be achieved. One way of achieving this is to coat seeds with a coating material, the material having dispersed therein a water repellent or waterproofing agent, as described above. In this method the water repellent or waterproofing agent is uniformly mixed with and dispersed in the coating material in an amount of up to 10% by weight. However, since, in this method, the amount of the water repellent or waterproofing agent in the coating layer is low or the concentration of the water repellent in the coating layer is uniform, when there is a high rainfall or excessive flooding, it becomes impossible to control the water content of the environment surrounding the seeds, leading to the same situation where the surrounds of the seeds are sealed with water, thus causing insufficient supply of oxygen to the seeds. Thus, the seeds become dead or damaged to cause poor germination. In other words, according to this method, when there is a high rainfall or excessive flooding, excessive water surrounding the seeds which is not absorbed by soil infiltrates into the interface between the seed and the coating layer through the cracks on the coating layer to isolate the seed from oxygen.

DE—A—1457894 discloses coated seeds having (a) a first, purely hydrophobic (water-repellent) layer, e.g. of magnesium stearate, and thereon (b) a hydrophobic outer layer, e.g. of sodium alginate, which assists water uptake.

CA—A—901310 discloses coated seeds having (a) a first coating or coatings of controlled permeability to water, formed from water-insoluble particulate material, e.g. talc, ground limestone or clay, optionally with a plasticiser and/or a fungicide, and thereon (b) an outer natural or synthetic polymeric coating having a water vapor transmission rate of 0.3 to 35 grams water/100 $m^2$ of a 1 mil thick film/24 hours, which assists survival of the dormant seed.

GB—A—690818 discloses coated seeds wherein the coating may consist of alternate layers of (a) sub-bentonite clay, which is non-swelling, and (b) exfoliated vermiculite (hydrated aluminium iron magnesium silicate, which has been heat-expanded and allows air to reach the seed).

It is an aim of this invention to provide coated seeds which germinate satisfactorily without being damaged even when the water content of soil varies over a broad range.

None of these above mentioned coatings meets the aim of this invention.

According to this invention we provide a coated seed having at least two coating layers, wherein the innermost layer contains a water repellent substance such as a fatty acid or metal salt thereof in higher concentration than the amount, if any, of water repellent in other coating layer or layers, characterised in that said concentration of water repellent in the innermost layer is 15 to 95 wt.% of the layer and in that the coating material of the coating layers is an inorganic material.

The coated seed is prevented from being sealed with water infiltrating through the cracks as in a single, conventional coating, even in the case of a high rainfall or excessive flooding.

The concentration of water repellent in the innermost coating layer is 15 wt.% or higher, to ensure the

2

desired effect. The thickness of the innermost coating layer should be 0.2 mm or more. The coating layer(s) other than the innermost layer may or may not contain a water repellent. The effect of this invention is produced as long as the innermost coating layer contains a water repellent in higher concentration than in other coating layer(s). Where the concentration of water repellent in the outer coating layer is as low as 5 wt.% or less, the concentration of water repellent in the innermost coating layer should preferably be higher than that by 10 wt.% or more. Thus, the concentration of water repellent in the innermost coating layer is from 15 to 95 wt.%.

Where the water content of the soil is high due to a high rainfall or excessive flooding, the higher the concentration of water repellent in the coating layers, the better the effect. However, the high concentration of water repellent adversely affects the coating operation and increases the production cost. In addition, a high concentration of water repellent softens the coating layers and causes the coating layers to be broken during transportion and sowing. In the case of rather dry soil, there is possibility of the excess water repellent inhibiting germination.

Water repellents which can be used in this invention include, for example, wax, asphalt, fatty acids and metal salts thereof, mineral oil and rosin. Among these, fatty acids and metal salts thereof such as stearic acid, calcium stearate and barium stearate, are preferred from the standpoint of adhesion to the seed surface, workability and effect.

The coating layers may be made from diatomaceous earth, talc, clay, calcium carbonate or any other inorganic materials which are capable of forming a coating. The materials may be used alone or in admixture of two or more.

The coating material may incorporate a suitable amount of pesticide such as fungicide to prevent disease after germination and/or a germination promoter.

The coating of seeds may be accomplished by any known method using a fluid bed granulator, air-suspension coating apparatus or rotary pan. The multi-layers can be formed by switching the coating material during the course of coating.

The invention will now be described in more detail with reference to the following Examples and Comparative Examples, which are not intended to limit the scope of this invention.

Example 1

Multi-coating of onion seeds was accomplished as follows: One liter of onion seeds having a germination percentage of 85% was coated in a rotary pan with clay uniformly mixed with 30 wt.% of barium stearate, until the coating thickness reached 0.5 mm, the seeds being sprayed the while with a 0.5% PVA aqueous solution. The seeds thus coated were subsequently coated with clay.

The coated seeds were 4.5 to 5.5 mm in diameter. After drying at 35°C for 24 hours, the coated seeds were sown in a field divided into four plots. The field was flooded every other day so that the water content of the soil in the respective plots was kept at 45%, 60%, 70%, and 100% of the maximum water capacity. The germination percentage was measured and the results are shown in Table 1.

Example 2

Multi-coating of onion seeds was accomplished as follows:

TABLE 1

| | Coating materials | | Germination percentage (%) | | | |
|---|---|---|---|---|---|---|
| | Internal coating layer | External coating layer | 45% Plot | 60% Plot | 70% Plot | 100% Plot |
| Example 1 | Clay/barium stearate (70/30) | Clay | 84 | 85 | 85 | 85 |
| Example 2 | Clay/stearic acid (85/15) | Clay/stearic acid (95/5) | 85 | 85 | 85 | 84 |
| Comparative Example 1 | Clay | | 80 | 85 | 80 | 5 |
| Comparative Example 2 | Clay/stearing acid (95/5) | | 80 | 85 | 85 | 25 |
| Comparative Example 3 | Clay/barium stearate (70/30) | | 50 | 81 | 84 | 85 |

Note

Germination percentage was measured 12 days after sowing. (Number of germinated seeds/Number of sown seeds)×100%.

The water content of soil is expressed in terms of the ratio of held water to maximum water capacity

One liter of the same onion seeds as used in Example 1 was coated in a rotary pan with clay uniformly mixed with 15 wt.% of stearic acid powder, until the coating thickness reached 0.7 mm, the seeds being simultaneously sprayed with a 0.5% PVA aqueous solution. The coated seeds were subsequently coated with clay uniformly mixed with 5 wt.% of stearic acid powder, sowing and flooding were carried out, and the germination percentage measured, in the same way as in Example 1. The results are shown in Table 1.

Comparative Example 1

Coating of onion seeds was accomplished as follows: One liter of the same onion seeds as used in Example 1 was coated with clay in the same way as in Example 1. Sowing and flooding were performed, and the germination percentage measured, in the same way as in Example 1. The results are shown in Table 1.

Comparative Example 2

Coating of onion seeds was accomplished as follows: One liter of the same onion seeds as used in Example 1 was coated with a mixture composed of 95 wt.% clay and 5 wt.% stearic acid in the same way as in Example 1. Sowing and flooding were performed, and the germination percentage measured, in the same way as in Example 1. The results are shown in Table 1.

Comparative Example 3

Coating of onion seeds was accomplished as follows: One liter of the same onion seeds as used in Example 1 was coated with clay uniformly mixed with 30 wt.% of barium stearate in the same way as in Example 1. Sowing and flooding were performed, and the germination percentage measured, in the same way as in Example 1. The results are shown in Table 1.

As is clear from Table 1, in Examples 1 and 2, the germination percentage measured 12 days after sowing was 84 to 85%, which value is equal to or very close to the original germination percentage in all the plots in which the soil has a water content of from 45% to 100%. In comparison, taking the 45% plot, while Comparative Examples 1 and 2 show a germination percentage of 80%, which value is close to the original germination percentage, Comparative Example 3 shows a germination percentage of only 50%.

Taking the 70% plot, Examples 1 and 2 and Comparative Examples 2 and 3 showed germination percentages equal to or very close to the original germination percentage 85%, and Comparative Example 1 also shows a germination percentage close to the original one. However, with the 100% plot, while Examples 1 and 2 and Comparative Example 3 show germination percentages equal to or very close to the original Comparative Examples 1 and 2 show greatly decreased germination percentages and in particular, in Comparative Example 1 the germination percentage is significantly decreased.

Moreover, in Comparative Example 3 nearly 20% of the coated seeds were broken during the sowing because of their weak coating layer. These results indicate that merely increasing the content of water repellent in the coating layer not only decreases the germination percentage of the seeds sown in the soil with low water content, but also lowers the strength of the coating layer

## Claims

1. A coated seed having at least two coating layers, wherein the innermost layer contains a water repellent substance such as a fatty acid or metal salt thereof in higher concentration than the amount, if any, of water repellent in other coating layer or layers, characterised in that said concentration of water repellent in the innermost layer is 15 to 95 wt.% of the layer and in that the coating material of the coating layers is an inorganic material.

2. A coated seed as claimed in Claim 1, wherein the coating material is diatomaceous earth, talc, clay or calcium carbonate.

3. A coated seed as claimed in Claim 1, wherein the coating material is clay.

## Patentansprüche

1. Beschichteter Samen mit mindestens zwei Umhüllungsschichten, wobei die innere Schicht eine wasserabstoßende Substanz, wie eine Fettsäure oder ein Metallsalz davon, in höherer Konzentration als die Menge, falls vorhanden, an wasserabstoßender Substanz in der oder den anderen Umhüllungsschichten enthält, dadurch gekennzeichnet, daß die Konzentration der wasserabstoßenden Substanz in der innersten Schicht 15 bis 95 Gew.-% der Schicht ausmacht, und daß das Beschichtungsmaterial der Umhüllungsschichten ein anorganisches Material ist.

2. Beschichteter Samen nach Anspruch 1, wobei das Beschichtungsmaterial Diatomeenerde, Talk, Ton oder Calciumcarbonat ist.

3. Beschichteter Samen nach Anspruch 1, wobei das Beschichtungsmaterial Ton ist.

## Revendications

1. Une graine enrobée ayant au moins deux couches d'enrobage, dans laquelle la couche la plus profonde contient une substance hydrofugeante telle qu'un acide gras ou son sel métallique à une concentration plus grande que la quantité, le cas échéant, d'agent hydrofugeant dans la ou les autres couches d'enrobage, caractérisée en ce que ladite concentration en hydrofugeant dans la couche la plus profonde est de 15 à 95% en poids de la couche et en ce que la matière d'enrobage dans les couches d'enrobage est une matière inorganique.

2. Une graine robée selon la revendication 1, dans laquelle la matière d'enrobage est la terre d'infusoires, le talc, l'argile ou le carbonate de calcium.

3. Une graine enrobée selon la revendication 1, dans laquelle la matière d'enrobage est l'argile.